Europäisches Patentamt

European Patent Office

Office européen des brevets

(11) Veröffentlichungsnummer: **0 278 367**

**A1**

(12) # EUROPÄISCHE PATENTANMELDUNG

(21) Anmeldenummer: **88101477.3**

(51) Int. Cl.⁴: **A01K 89/015**

(22) Anmeldetag: **02.02.88**

(30) Priorität: **02.02.87 DE 8701557 U**

(43) Veröffentlichungstag der Anmeldung:
**17.08.88 Patentblatt 88/33**

(84) Benannte Vertragsstaaten:
**FR GB SE**

(71) Anmelder: **CORMORAN SPORTARTIKEL-VERTRIEB VON KELLER UND WILLENBRUCH GMBH**
**Benzstrasse 20**
**D-8039 Puchheim/Bahnhof(DE)**

(72) Erfinder: **Schuster, Reinhold**
**Peter-Rosegger-Strasse 49**
**D-8039 Puchheim/Bahnhof(DE)**

(74) Vertreter: **Patentanwälte Schaumburg & Thoenes**
**Mauerkircherstrasse 31 Postfach 86 07 48**
**D-8000 München 80(DE)**

(54) **Angelwinde.**

(57) Bei einer Angelwinde, umfassend eine Schnurrolle (32), die beiderseits ihrer Rollenflansche (34) in einem Lagerrahmen (24, 26) drehbar gelagert ist und über ein Getriebe mit einer Handkurbel in Antriebsverbindung steht, und eine Kupplungseinrichtung mit einem über einen Handhebel (126) betätigbaren Ausrückmechanismus zum wahlweisen Unterbrechen der Antriebsverbindung zwischen Handkurbel und Schnurrolle (32), ist der Lagerrahmen (24, 26) oder ein diesen umgebendes Windengehäuse mit einem T-förmigen Fuß (16) zur Befestigung der Angelwinde an einer Angelrute verbunden. Der Handhebel (126) ist auf der den T-förmigen Fuß tragenden Seite der Angelwinde (12) angeordnet, wobei diese eine durch den Handhebel (126) betätigbare Bremseinrichtung (134) zum wahlweisen Bremsen der Schnurrolle (32) nach dem Unterbrechen der Antriebsverbindung zwischen Schnurrolle (32) und Handkurbel aufweist.

FIG. 2

## Angelwinde

Die Neuerung betrifft eine Angelwinde, umfassend eine Schnurrolle, die beiderseits ihrer Rollenflansche in einem Lagerrahmen drehbar gelagert ist und über ein Getriebe mit einer Handkurbel in Antriebsverbindung steht, und einer Kupplungseinrichtung mit einem über einen Handhebel betätigbaren Ausrückmechanismus zum wahlweisen Unterbrechen der Antriebsverbindung zwischen Handkurbel und Schnurrolle.

Angelwinden der vorstehend beschriebenen Art werden üblicherweise unmittelbar an der Angelrute befestigt, wobei die Angelschnur von der Schnurrolle direkt parallel zur Angelrute abläuft. Beim Gebrauch wird die Angelrute üblicherweise so gehalten, daß die Angelwinde oben liegt. Wird nun die Angel ausgeworfen, so holt der Angler Schwung und drückt zu einem gegebenen Zeitpunkt mit dem Daumen der die Rute haltenden Hand auf den tastenähnlich ausgebildeten Handhebel, um die Kupplung auszurücken, die Schnurrolle freizugeben und damit das ungehinderte Ablaufen der Angelschnur zu ermöglichen. Dabei steuert der Angler die Menge der ablaufenden Schnur und damit auch die Weite des Wurfes, in dem er mit dem den Handhebel betätigenden Daumen die Schnurrolle beim Ablaufen der Angelschnur mehr oder weniger bremst.

Ferner sind Angelwinden bekannt, die mittels eines T-förmigen Fußes an der Angelrute befestigt sind und im Gebrauch der Angelrute unter dieser hängen. Bei diesen Angelwinden ist die Schnurrolle mit ihrer Welle parallel zur Angelrute ausgerichtet. Die Schnur wird über einen um die Schnurrolle rotierenden Schnurfangbügel aufgewickelt oder abgewickelt. Es besteht auch die Möglichkeit, den Schnurfangbügel zurückzuklappen und die Schnur direkt von der Schnurrolle ablaufen zu lassen. In jedem Falle wird beim Aufwickeln und Abwickeln der Schnur diese verdrillt. Diese hängende Anordnung der Angelwinde hat insbesondere dann, wenn größere Fische gefangen werden sollen und größere Zugkräfte zu erwarten sind, gewisse Vorteile. Auf der anderen Seite hat der Angler bei diesen Angelrollen nicht die Möglichkeit, beim Auswerfen der Angel die Schnurrolle in der gleichen Weise feinfühlig zu bremsen und damit den Wurf zu beeinflussen, wie dies bei der eingangs geschilderten Angelwinde der Fall ist. Der Neuerung liegt die Aufgabe zugrunde, eine Angelwinde der eingangs genannten Art anzugeben, welche die Vorteile der beiden vorstehend beschriebenen Typen von Angelwinden in sich vereinigt.

Diese Aufgabe wird neuerungsgemäß dadurch gelöst, daß der Lagerrahmen oder ein diesen umgebendes Windengehäuse mit einem T-förmigen Fuß zur Befestigung der Angelwinde an einer Angelrute verbunden ist, daß der Handhebel auf der den T-förmigen Fuß tragenden Seite der Angelwinde angeordnet ist und daß die Angelwinde eine durch den Handhebel betätigbare Bremseinrichtung zum wahlweisen Bremsen der Schnurrolle nach dem Unterbrechen der Antriebsverbindung zwischen Schnurrolle und Handkurbel aufweist.

Die erfindungsgemäße Angelwinde ist ebenfalls in hängender Anordnung an einer Angelrute befestigbar. Mit dem sich von der Angelwinde in Richtung auf die Angelrute erstreckenden Handhebel kann mit einem Finger der die Rute haltenden Hand beim Wurf einerseits der Ausrichtmechanismus betätigt und damit die Schnurrolle freigegeben werden und andererseits nach Wunsch die Bremseinrichtung betätigt werden, um den Lauf der Schnurrolle und damit auch die Weite des Wurfes zu beeinflussen.

Bei einer Kupplungseinrichtung, die ein koaxial zur Schnurrollenwelle angeordnetes, mit einem Antriebsritzel verbundenes und zwischen einer Antriebsstellung und einer Freilaufstellung axial verschiebbares Kupplungselement und einen Schieber mit einer Rampe umfaßt, die mit einer mit dem Kupplungselement verbundenen Gegenfläche zum axialen Verstellen des Kupplungselementes zusammenwirkt, läßt sich die Bremseinrichtung in einfacher Weise dadurch kombinieren, daß am Lagerrahmen ein zweiarmiger Betätigungshebel - schwenkbar gelagert ist, dessen einer Arm mit dem Handhebel und dessen anderer Arm mit dem Schieber gelenkig verbunden ist und einen zur Anlage an einem Rollenflansch bestimmten Bremsbügel trägt. Durch Verschwenken des Betätigungshebels wird zunächst der Schieber und damit das Kupplungselement verschoben. Nach dem Ausrücken der Kupplung tritt dann der Bremsbügel in Kontakt mit dem Rollenflansch. Diese Folge der Bewegungsabläufe wird dadurch sichergestellt, daß das Gelenk zwischen Schieber und Betätigungshebel zwischen dessen Schwenkachse und dem Bremsbügel liegt. Dabei kann das Gelenk zwischen dem eine Schwenkbewegung ausführenden Betätigungshebel und dem translatorisch verstellbaren Schieber auf einfache Weise dadurch gebildet werden, daß es einen mit dem einen Teil (Schieber, Betätigungshebel) verbundenen Stift aufweist, der mit Spiel in ein an dem anderen Teil (Betätigungshebel, Schieber) ausgebildetes Loch eingreift.

Der Bremsbügel besteht zweckmäßigerweise aus einem elastisch verformbaren Material und weist eine gekrümmte Bremsfläche mit gegenüber dem Außenradius des Rollenflansches kleinerem Krümmungsradius auf. Dadurch treten zunächst die Enden des Bremsbügels in Berührung mit dem Rollenflansch. Wird der Bremsbügel weiter verschwenkt und damit die Bremskraft erhöht, werden die sich elastisch verformenden Enden des Bremsbügels nach außen gedrückt, so daß sich die am Rollenflansch anliegende Bremsfläche vergrößert. Um eine starke Bremswirkung zu erreichen, kann an dem Bremsbügel in einem mittleren Abschnitt zwischen dessen Enden ein Bremsbelag mit hohem Reibungskoeffizienten angeordnet sein. Dieser Bremsbelag tritt erst dann mit dem Rollenflansch in Berührung, wenn bei entsprechend hoher Bremskraft die Enden des Bremsbügels soweit nach außen gebogen wurden, daß der Krümmungsradius der Bremsfläche sich dem Außenradius des Rollenflansches angepaßt hat.

Der Handhebel ist zweckmäßigerweise als zweiarmiger Hebel mit ungleichen Hebelarmen ausgebildet, wobei der längere Hebelarm ein Griffteil bildet und nahe dem T-förmigen Fuß aus dem Lagerrahmen herausragt, so daß er bequem mit der die Rute haltenden Hand erfaßbar ist, während der kürzere Hebelarm mit einer Rückstellfeder und über einen Doppellenker mit dem Betätigungshebel verbunden ist.

Eine fertigungstechnisch einfache und funktionssichere Kupplungseinrichtung erhält man dadurch, daß das Kupplungselement frei drehbar in einem Bügel gelagert ist, der beiderseits der Schnurrollenwelle jeweils an einer zu dieser parallelen Führungsstange geführt und in eine der Antriebsstellung des Kupplungselementes entsprechende Stellung vorgespannt ist, und daß der Schieber gabelförmig ausgebildet ist, wobei die jeweils eine Rampenfläche tragenden Gabelschenkel unter den Bügel einschiebbar sind. Der Schieber ist zweckmäßigerweise in seine der Antriebsstellung des Kupplungselementes entsprechende Ruhestellung vorgespannt, was beispielsweise durch die an den Handhebel angreifende Rückstellfeder erfolgen kann.

Der Schieber kann in der der Freilaufstellung des Kupplungselementes entsprechenden Ausrückstellung verrastbar sein, so daß er gegenüber einer selbsttätigen Rückkehr in seine Ruhestellung gesperrt ist. Das Ausrücken aus seiner Sperrstellung kann dadurch erfolgen, daß die Handkurbel mit einem Mitnehmer in Antriebsverbindung steht, der bei einer Drehung der Handkurbel den Schieber aus seiner Sperrstellung ausrückt. Sowie also der Angler die Kurbel wieder dreht, springt der Schieber zurück in seine Ruhestellung, so daß die Antriebsverbindung zwischen der Schnurrolle und der Handkurbel wieder hergestellt ist.

Weitere Vorteile und Merkmale der Neuerung ergeben sich aus der folgenden Beschreibung, welche in Verbindung mit den beigefügten Zeichnungen die Neuerung anhand eines Aufführungsbeispieles erläutert. Es zeigen:

Fig. 1 eine schematische Seitenansicht einer neuerungsgemäßen Angelwinde mit einem Abschnitt der mit ihr verbundenen Angelrute,

Fig. 2 eine geschnittene Teilansicht der in Fig. 1 dargestellten Angelwinde mit senkrecht zur Kurbelwellenachse verlaufende Schnittebene,

Fig. 3 eine Draufsicht auf das Getriebe und die Kupplungseinrichtung der neuerungsgemäßen Angelwinde in Richtung der Schnurrollenachse mit schematisch angedeutetem Gehäuse,

Fig. 4 eine schematische Teilseitenansicht des Antriebs mechanismus der Angelwinde mit - schematisch angedeutetem Gehäuse und

Fig. 5a bis 5c schematische Darstellungen zur Erläuterung der Wirkung des Bremsbügels bei Betätigung des mit der Kupplungseinrichtung und der Bremseinrichtung verbundenen Handhebels.

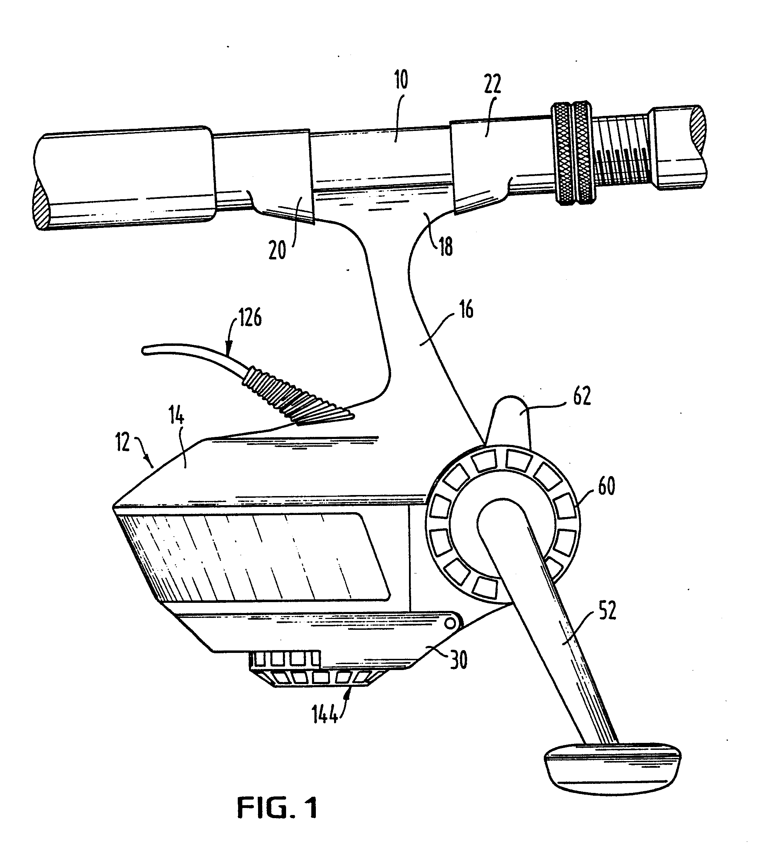

In Fig. 1 erkennt man einen Abschnitt einer allgemein mit 10 bezeichneten Angelrute, an der eine allgemein mit 12 bezeichnete Angelwinde befestigt ist. Deren Gehäuse 14 ist mit einem T-förmigen Fuß 16 verbunden, dessen T-Querbalken 18 an der Angelrute 10 anliegt und in an sich bekannter Weise durch zwei rohrförmige Muffen 20, 22 an der Angelrute 10 befestigt ist.

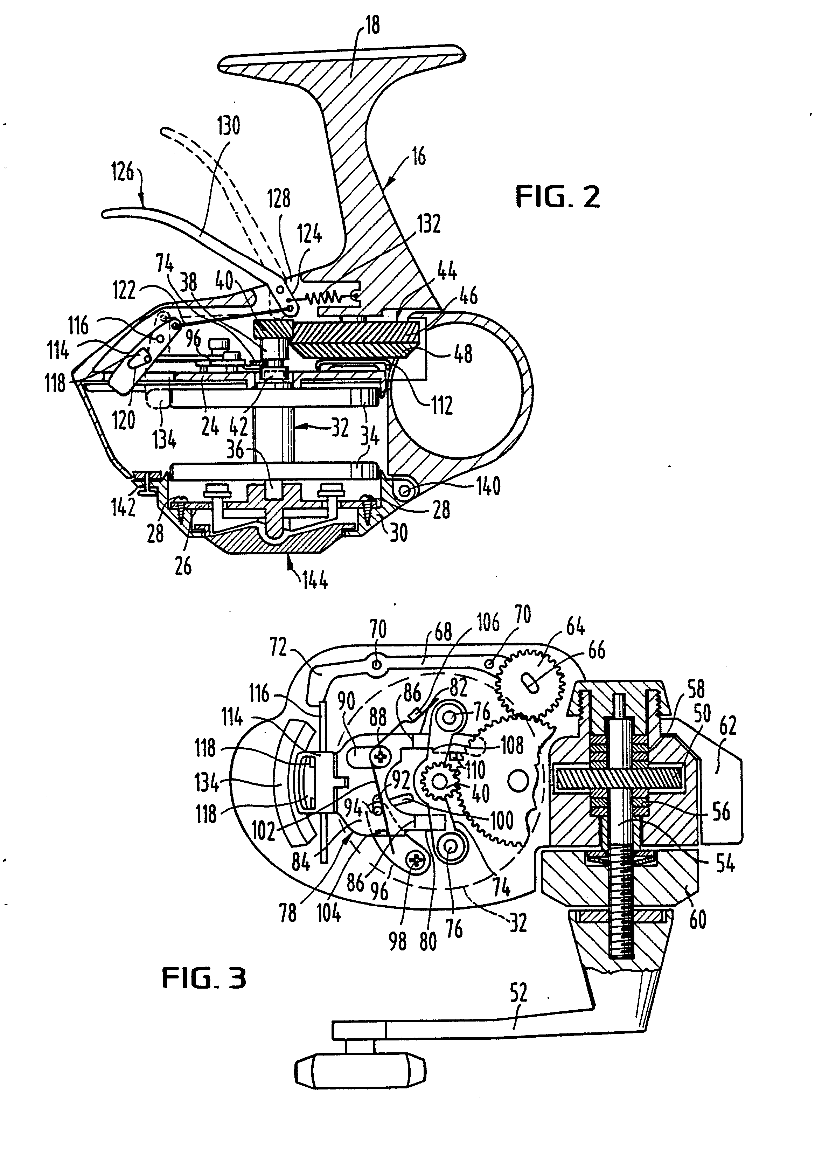

In einer einstückig mit dem restlichen Gehäuse ausgebildeten Lagerplatte 24 einerseits und einer zweiten Lagerplatte 26 andererseits, die mit Schrauben 28 an einem klappbaren Gehäusedeckel 30 befestigt ist, ist eine Schnurrolle 32 frei drehbar gelagert, die von Rollenflanschen 34 begrenzt wird. Auf der der Lagerplatte 24 zugewandten Seite ist auf einem Abschnitt der Rollenwelle 36 eine Kupplungshülse 38 axial verschiebbar gelagert, die ein schräg verzahntes Ritzel 40 trägt. Die Kupplungshülse 38 ist über einen in Fig. 2 angedeuteten Vierkant 42 mit der Spulenwelle 36 drehfest verbindbar. Wird die Kupplungshülse 38 in axialer Richtung von der Schnurrolle 32 weggeschoben, so löst sie sich von dem Vierkant 42, so daß Kupplungshülse 38 und Schnurrolle 32 frei gegeneinander verdrehbar sind.

Das Ritzel 40 steht in Eingriff mit einem Zwischenrad 44, das aus einem schrägverzahnten Stirnrad 46 und einem einstückig mit diesem verbundenen Kegelzahnrad 48 besteht. Das Zwischenrad 44 ist in der Lagerplatte 24 und dem Gehäuse 14 der Angelwinde 12 frei drehbar gelagert. Das Kegelzahnrad 48 steht in Eingriff mit einem Stirnrad 50 (Fig. 3), das auf einer mit einer Handkurbel 52 verbundenen Welle 54 frei drehbar gelagert ist. Beiderseits des Stirnrades 50 sind Bremsscheibenpakete 56, 58 auf der Welle 54 axial verschiebbar, jedoch drehfest mit der Welle 54 angeordnet. Durch Drehen eines koaxial zur Welle 54 angeordneten Einstellrades 60 können die Bremsscheibenpakete 56 und 58 in axialer Richtung so zusammengespannt werden, daß sie das Stirnrad 50 mit mehr oder weniger großem Schlupf oder auch ohne irgendeinen Schlupf antreiben. Diese Art der Reibungsbremse des Schnurrollenantriebes ist an sich bekannt und wird daher nicht näher erläutert. Das gleiche gilt für einen um die Wellenachse 54 drehbaren Hebel 62, durch dessen Verdrehen die Bremswirkung der von den Bremsscheibenpaketen 56 und 58 gebildeten Reibungsbremse unabhängig von der jeweils eingestellten Bremskraft ein-und ausgeschaltet werden kann.

Da dieser Mechanismus ebenfalls bereits bekannt ist, wird er hier nicht näher erläutert.

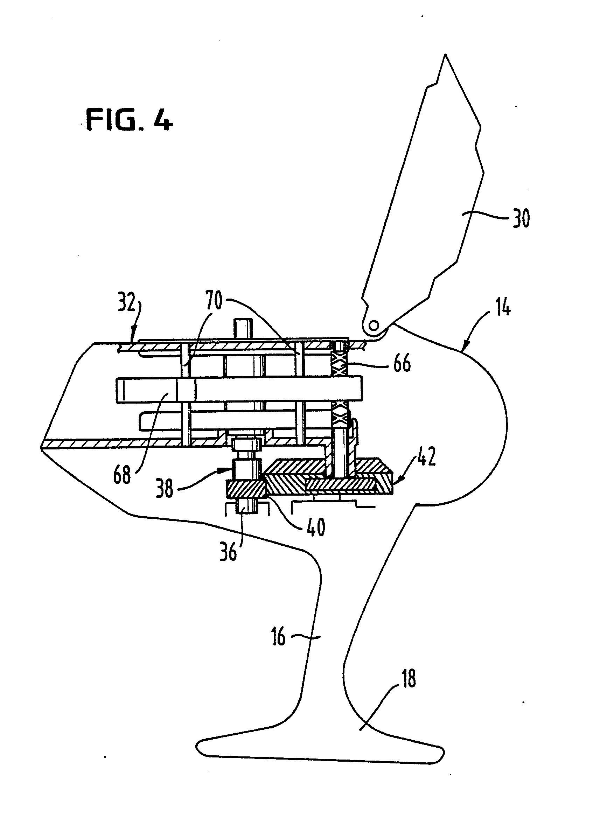

Mit dem Stirnrad 46 des Zwischenrades 44 steht ferner ein Ritzel 64 in Eingriff, das mit einer Kreuzgewindespindel 66 verbunden ist (Figur 4). Diese bewegt einen Schnurführungsbügel 68 hin und her, der an zwei zur Rollenwelle 36 parallelen Führungsstangen 70 verschiebbar geführt ist und an seinem der Kreuzgewindespindel 66 fernen Ende eine Schnurführungsöse 72 trägt. Der Schnurführungsbügel 68 sorgt durch seine Hin-und Herbewegung beim Betätigen der Handkurbel 52 für ein gleichmäßiges Aufwickeln der Angelschnur auf die Schnurrolle.

Die Kupplungshülse 38 ist in einer Kerbe eines flachen Führungsbügels 74 frei drehbar gelagert, der mit seinen Enden an zur Rollenwelle 36 parallelen Führungsstangen 76 verschiebbar geführt ist und durch nicht dargestellte Federn in Richtung auf die Lagerplatte 24 vorgespannt ist. Zur axialen Verstellung des Führungsbügels 74 und damit der Kupplungshülse 38 dient ein flacher gabelförmiger Schieber 78, der mit seinen Gabelschenkeln 80, 82 beidseits der Schnurrollenwelle 36 unter den Führungsbügel 74 greift. Die Gabelschenkel 80 und 82 sind gegenüber dem sie verbindenden Hauptabschnitt 84 des Schiebers 78 so abgekröpft, daß eine in Figur 3 angedeutete Rampenfläche 86 entsteht, die bewirkt, daß der Führungsbügel 84 in axialer Richtung verschoben wird, wenn der Schieber 78 in Figur 3 nach rechts bewegt wird.

Der Schieber 78 ist an der Lagerplatte 24 für eine translatorische Bewegung durch einen Bolzen 88 geführt, der ein Langloch 90 des Schiebers 78 durchsetzt. Gleichzeitig wird eine Schwenkbewegung des Schiebers um die Achse des Bolzens 88 dadurch ermöglicht, daß in ein Langloch 92 des Schiebers 78 ein Zapfen 94 greift, der an einer Schwinge 96 befestigt ist, die ihrerseits mit einer Schraube 98 an der Lagerplatte 24 schwenkbar befestigt und bei ihrer Schwenkbewegung um die Achse der Schraube 98 durch eine Stiftlanglochführung 100 geführt ist. Diese Lagerung des Schiebers 78 hat den Zweck, ein Verrasten des Schiebers 78 in der der Freilaufstellung der Kupplungshülse 38 entsprechenden Stellung zu ermöglichen. Dabei schwenkt der Schieber 78 unter der Wirkung eines Federbügels 102, der sich einerseits an einem schieberfesten Anschlag 104 und andererseits an einem mit der Lagerplatte 24 verbundenen Anschlag 106 abstützt, so, daß eine an dem Gabelschenkel 82 ausgebildete Rastnase 108 hinter einem fest mit der Lagerplatte 24 verbundenen Anschlag 110 einschnappt. Aus dieser Sperrstellung wird der Schieber dadurch gelöst, daß die Handkurbel 52 betätigt wird, wobei ein mit dem Zwischenrad 44 verbundener Mitnehmer 112 (Figur 2) an den Gabelschenkel 82 stößt und diesen von dem Anschlag 110 wegschiebt.

Die Betätigung des Schiebers erfolgt durch einen zweiarmigen Betätigungshebel 114, der um eine Welle 116 schwenkbar am Gehäuse 14 gelagert ist. Der Betätigungshebel 114 besitzt ein U-förmiges Profil, wobei in der Figur 2 ein U-Schenkel zu erkennen ist. Die Gelenkverbindung zwischen dem Betätigungshebel 114 und dem Schieber 78 erfolgt durch zwei an diesem ausgebildete Stifte 118, die jeweils in eine dreieckförmige Aussparung 120 in einem der U-Schenkel des Betätigungshebels 114 eingreift, wie man dies in den Figuren 2 und 3 erkennen kann. Das durch die Form der Aussparung 120 gegebene Spiel erlaubt die Umsetzung der Schwenkbewegung des Betätigungshebels 114 in eine gerade translatorische Bewegung des Schiebers 78. Der entgegengesetzte Hebelarm des Betätigungshebels 114 ist über einen Doppellenker 122 mit dem kurzen Hebelarm 124 eines Handhebels 126 verbunden, der in einer Öffnung 128 auf der dem T-förmigen Fuß 16 zugekehrten Gehäuseseite schwenkbar gelagert ist und mit seinem längeren Hebelarm 130 soweit aus dem Gehäuse 14 herausragt, daß er bequem mit einem Finger der die Angelrute 10 haltenden Hand erfaßt und in Richtung auf die Angelrute 10 bewegt werden kann. Dabei wird, wie die Figur 2 zeigt, der Betätigungshebel 114 um seine Achse 116 verschwenkt. Die Rückstellung des Handhebels 126 und damit auch des Schieber 78 erfolgt durch eine Feder 132, die einerseits am Gehäuse 14 und andererseits an dem kurzen Hebelarm 124 des Handhebels 126 angreift.

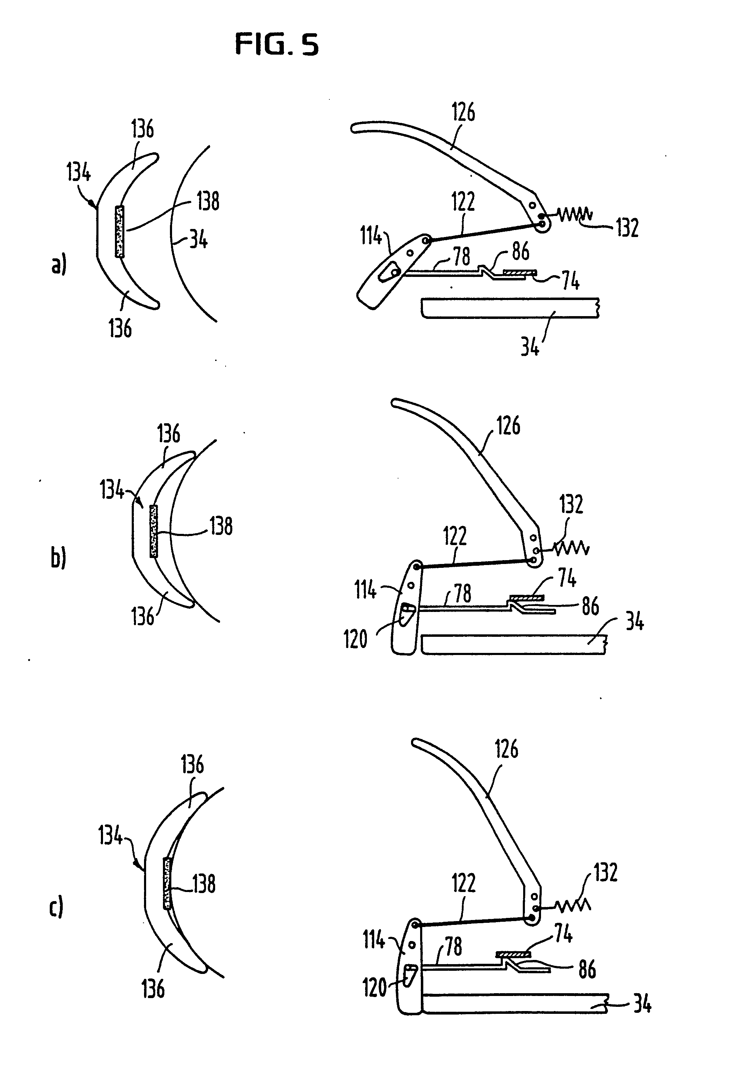

Das der Schnurrolle 32 zugekehrte Ende des Betätigungshebels 114 ist mit einem Bremsbügel 134 verbunden, der zur Anlage an der Außenumfangsfläche eines Rollenflansches 34 bestimmt ist (siehe Figuren 2 und 5). Die dem Rollenflansch 34 zugekehrte Bremsfläche 136 des Bremsbügels 134 besitzt einen gegenüber dem Außenradius des Rollenflansches 34 geringeren Krümmungsradius. Der Bremsbügel 134 besteht aus einem elastischen Material und paßt sich bei stärkerem Bremsdruck dem Außenradius des Rollenflansches 34 an, wobei bei maximalem Bremsdruck ein in der Mitte zwischen den Bügelenden angeordneter Bremsbelag 138 mit hohem Reibungskoeffizienten zur Anlage an der Außenumfangsfläche eines Rollenflansches 34 kommt. Die Figuren 5a bis 5c zeigen dabei verschiedene Stellungen des Bremsbügel relativ zum Rollenflansch und die jeweils zugehörigen Stellungen des Handhebels 126. Daraus ergibt sich, daß beim Verschwenken des Handhebels 126 in Richtung auf die Angelrute 10 zunächst der Schieber 78 unter den Führungsbügel 74 greift und dabei die Kupplungshülse 38 axial verschiebt bis die Antriebsverbindung zwischen der Handkurbel 52 und der Schnurrolle 32 gelöst ist. Dabei rastet die Rastnase 108 an dem Gabelschenkel 82 hinter dem ortsfesten Anschlag 110 ein. Dann erst kommt bei weiterem Verschwenken des Handhebels 126 in Richtung auf die Angelrute 10 der Bremsbügel 134 zur Anlage an der Außenumfangsfläche des Rollenflansches 34, so daß nun die Drehbewegung der Schnurrolle 32 beim Ablaufen der Angelschnur feinfühlig gebremst werden kann.

Beim Loslassen des Handhebels 126 wird dieser durch die Rückstellfeder 132 soweit verschwenkt, wie dies das Spiel in der Gelenkverbindung zwischen dem Schieber 78 und dem Betätigungshebel 114 bzw. die Rastverbindung 108, 110 zuläßt. Wird diese Rastverbindung 108, 110 durch Drehen der Kurbel 52 gelöst, so kehren der Schieber 78 und der Handhebel 126 in ihre Ausgangsstellung zurück. Die drehfeste Verbindung zwischen der Handkurbel 52 und der Schnurrolle 32 ist damit wiederhergestellt.

Der Gehäusedeckel 30 ist um eine zur Kurbelwelle 54 parallele Schwenkachse 140 schwenkbar und wird durch einen schematisch angedeuteten Verschluß 142 in seiner geschlossenen Stellung gehalten. Er enthält eine für sich bekannte einstellbare Magnetbremse 144, die dazu dient, ein Überdrehen der Schnurrolle 32 im Freilauf zu vermeiden, wenn die Schnurrolle 32 nicht durch den Bremsbügel 134 gebremst wird. Durch Aufklappen des Deckels 30 kann die Schnurrolle 32 herausgenommen und ausgewechselt werden.

## Ansprüche

1. Angelwinde, umfassend eine Schnurrolle, die beiderseits ihrer Rollenflansche in einem Lagerrahmen drehbar gelagert ist und über ein Getriebe mit einer Handkurbel in Antriebsverbindung steht, und eine Kupplungseinrichtung mit einem über einen Handhebel betätigbaren Ausrückmechanismus zum wahlweisen Unterbrechen der Antriebsverbindung zwischen Handkurbel und Schnurrolle, dadurch **gekennzeichnet,** daß der Lagerrahmen (24, 26) oder ein diesen umgebendes Windengehäuse (14) mit einem T-förmigen Fuß (16) zur Befestigung der Angelwinde (12) an einer Angelrute (10) verbunden ist, daß der Handhebel (126) auf der den T-förmigen Fuß tragenden Seite der Angelwinde (12) angeordnet ist und daß diese eine durch den Handhebel (126) betätigbare Bremseinrichtung (134) zum wahlweisen Bremsen der Schnurrolle (32) nach dem Unterbrechen der Antriebsverbindung zwischen Schnurrolle (32) und Handkurbel (52) aufweist.

2. Angelwinde nach Anspruch 1, dadurch **gekennzeichnet,** daß die Kupplungseinrichtung ein koaxial zur Schnurrollenwelle (36) angeordnetes, mit einem Antriebsritzel (40) verbundenes und zwischen einer Antriebsstellung und einer Freilaufstellung axial verschiebbares Kupplungselement (38) und einen Schieber (78) mit einer Rampe (86) umfaßt, die mit einer mit dem Kupplungselement (38) verbundenen Gegenfläche (74) zur axialen Verstellung des Kupplungselementes (38) zusammenwirkt, und daß am Lagerrahmen oder am Windengehäuse (14) ein zweiarmiger Betätigungshebel (114) schwenkbar gelagert ist, dessen einer Arm mit dem Handhebel (126) und dessen anderer Arm mit dem Schieber (78) gelenkig verbunden ist und einen zur Anlage an einem Rollenflansch (34) bestimmten Bremsbügel (134) trägt.

3. Angelwinde nach Anspruch 2, dadurch **gekennzeichnet,** daß der Handhebel (126) als zweiarmiger Hebel ausgebildet ist, dessen längeres Griffteil (130) nahe dem T-förmigen Fuß (16) aus dem Windengehäuse (14) herausragt und dessen kürzerer Arm (124) mit einer Rückstellfeder (132) und über einen Doppellenker (122) mit dem Betätigungshebel (114) verbunden ist.

4. Angelwinde nach Anspruch 2 oder 3, dadurch **gekennzeichnet,** daß das Kupplungselement (38) frei drehbar in einem Bügel (74) gelagert ist, der beiderseits der Schnurrollenwelle (36) jeweils an einer zu dieser parallelen Führungsstange (98) geführt und in eine der Antriebsstellung des Kupplungselementes (38) entsprechende Stellung vorgespannt ist, und daß der Schieber (78) gabelförmig ausgebildet ist, wobei die jeweils eine Rampenfläche (36) tragenden Gabelschenkel (80, 82) unter den Bügel (74) einschiebbar sind.

5. Angelwinde nach einem der Ansprüche 2 bis 4, dadurch **gekennzeichnet,** daß der Schieber (78) in seine der Antriebsstellung des Kupplungselementes (78) entsprechende Ruhestellung vorgespannt ist.

6. Angelwinde nach einem der Ansprüche 2 bis 5, dadurch **gekennzeichnet,** daß der Schieber (78) in der der Freilaufstellung des Kupplungselementes (38) entsprechenden Ausrückstellung derart verrastbar ist, daß er gegenüber einer selbsttätigen Rückkehr in seine Ruhestellung gesperrt ist, und daß der Schieber (78) durch einen mit der Handkurbel (52) in Antriebsverbindung stehenden Mitnehmer (112) aus seiner Sperrstellung ausrückbar ist.

7. Angelwinde nach einem der Ansprüche 2 bis 6, dadurch **gekennzeichnet,** daß das Gelenk zwischen Schieber (78) und Betätigungshebel (114) zwischen dessen Schwenkachse (116) und dem Bremsbügel (134) liegt und einen mit dem einen Teil (Schieber, Betätigungshebel) verbundenen Stift (118) aufweist, der mit Spiel in ein an dem anderen Teil (Betätigungshebel, Schieber) ausgebildetes Loch (120) eingreift.

8. Angelwinde nach einem der Ansprüche 2 bis 7, dadurch **gekennzeichnet,** daß der Bremsbügel (134) aus einem elastisch verformbaren Material besteht und eine gekrümmte Bremsfläche (136) mit gegenüber dem Außenradius des Rollenflansches (34) kleinerem Krümmungsradius aufweist.

9. Angelwinde nach Anspruch 8, dadurch **gekennzeichnet,** daß an dem Bremsbügel (134) in einem mittleren Abschnitt zwischen dessen Enden ein Bremsbelag (138) angeordnet ist, der einen hohen Reibungskoeffizienten aufweist.

10. Angelwinde nach einem der Ansprüche 1 bis 9, dadurch **gekennzeichnet,** daß die Schnurrolle (32) mit einem Ende ihrer Welle (36) in einem mit einem Gehäusedeckel (30) verbundenen Lagerteil (26) gelagert ist und durch die durch den Deckel (30) verschließbare Gehäuseöffnung herausnehmbar ist.

FIG. 1

FIG. 2

FIG. 3

# FIG. 4

## FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 520 971 (NAGATA) <br> * Insgesamt * <br> --- | 1-6 | A 01 K 89/015 |
| P,X | US-A-4 640 471 (MURAKAMI) <br> * Insgesamt * <br> --- | 1-6 | |
| A | US-A-3 166 268 (CLARK) <br> * Insgesamt * <br> --- | 1 | |
| A | US-A-3 268 182 (CLARK) <br> * Insgesamt * <br> --- | 1,8 | |
| A | CH-A- 637 002 (ETABLISSEMENT LIOTTE REPRESENTATIONS ETRANGERES C/O PRÄSIDIAL-ANSTALT)) <br> ----- | | |

**RECHERCHIERTE SACHGEBIETE (Int. Cl.4)**

A 01 K

Der vorliegende Recherchenbericht wurde für alle Patentansprüche erstellt

| Recherchenort | Abschlußdatum der Recherche | Prüfer |
|---|---|---|
| DEN HAAG | 04-05-1988 | VERDOODT S.J.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)